# EUROPÄISCHE PATENTSCHRIFT

(11) **EP 3 990 294 B1**
(45) Veröffentlichungstag und Bekanntmachung des Hinweises auf die Patenterteilung: **05.03.2025**
(21) Anmeldenummer: 20725526.6
(22) Anmeldetag: 12.05.2020
(51) Int. Cl.: B60C 9/08, B60C 11/03, B60C 11/00

(54) **FAHRZEUGLUFTREIFEN**
PNEUMATIC TIRE
PNEUMATIQUE

(30) Priorität: 28.06.2019 DE 102019209450
(43) Veröffentlichungstag der Anmeldung: 04.05.2022
(73) Patentinhaber: Continental Reifen Deutschland GmbH, 30175 Hannover (DE)
(72) Erfinder: RÖMER, Justus, 30419 Hannover (DE); MÜLLER, Norbert, 30419 Hannover (DE)
(74) Vertreter: Continental Corporation
(86) Internationale Anmeldenummer: PCT/EP2020/063107
(87) Internationale Veröffentlichungsnummer: WO 2020/259909

(56) Entgegenhaltungen:
- EP-A1- 2 052 880
- FR-A1- 2 578 200
- JP-A- S6 259 104
- US-A1- 2013 220 500

## Beschreibung

Die Erfindung betrifft einen Fahrzeugluftreifen in Radialbauart mit einem Footprint, welcher mit einem auf einer Normfelge montierten Reifens bei einer Last von 70 % der maximalen Tragfähigkeit und einem Innendruck von 85 % des Normdruckes gemäß E.T.R.T.O.-Standards ermittelt wird, und mit einem profilierten Laufstreifen mit je einer Laufstreifenschulter außerhalb der seitlichen Footprint - Kanten des Footprints, wobei der Laufstreifen aus zumindest einem Gummimaterial besteht und wobei im Laufstreifen in Umfangsrichtung umlaufende sowie bis zur Laufstreifenperipherie reichende Inserts aus einem Gummimaterial enthalten sind, welches steifer ist als das sonstige Gummimaterial des Laufstreifens.

Ein derartiger Fahrzeugluftreifen ist beispielsweise aus der WO 2019/016440 A1 bekannt. Dieser Reifen weist einen Laufstreifen mit mehreren in Umfangsrichtung umlaufenden Umfangsrillen und zwischen diesen befindlichen Profilelementen auf. Im Querschnitt trapezförmige Inserts sind im Laufstreifen paarweise derart positioniert, dass ihre Seitenwände jeweils eine Rillenflanke einer Umfangsrille bilden. Die Inserts weisen eine Steifigkeit auf, welche größer ist als die Steifigkeit des Gummimaterials des Laufstreifens. Dadurch soll das dynamische Ansprechverhalten eines mit derartigen Reifen versehenen Fahrzeuges auf Lenkkräfte verbessert sein ohne dass der Rollwiderstand des Reifens oder sein Abrollgeräusch verschlechtert sind.

Aus der US 2013/0220500 A1 ist ein Nutzfahrzeugreifen mit einem mit Umfangsrillen profilierten Laufstreifen bekannt. Der Laufstreifen weist schulterseitige Profilrippen auf, in welchen jeweils ein bis zur Laufstreifenperipherie reichendes Insert enthalten ist, wobei die Inserts aus einem Gummimaterial bestehen, welches steifer ist als das sonstige Gummimaterial des Laufstreifens. Die Inserts befinden sich zumindest teilweise innerhalb des Footprints und sollen dazu beitragen, ein gegenüber dem sonstigen Laufstreifen verstärktes Abreiben der schulterseitigen Profilrippen zu verhindern.

Die FR 2 578 200 A1 offenbart einen Nutzfahrzeugreifen mit einem in axialer Richtung dreigeteilten Laufstreifen, sodass der Laufstreifen aus einem zentralen Laufstreifenteil und zwei schulterseitigen Laufstreifenteilen zusammengesetzt ist. Der zentrale Laufstreifenteil besteht aus einem Gummimaterial mit einer JIS-Härte von 63 bis 67 und einer Reißfestigkeit von 240 kg/cm² bis 280 kg/cm², um die Schnittbeständigkeit zu verbessern. Die schulterseitigen Laufstreifenteile bestehen aus einem Gummimaterial mit einer JIS-Härte von 58 bis 62 und einer Reißfestigkeit von 280 kg/cm² bis 320 kg/cm² und sollen eine gute Abriebbeständigkeit aufweisen.

Aus der JP S62 59104 A ist ein Fahrzeugluftreifen mit einem Laufstreifen mit schulterseitigen Profilrippen bekannt, welche zumindest teilweise von schulterseitigen Laufstreifenteilen gebildet sind, wobei die schulterseitigen Laufstreifenteile bis zur Laufstreifenperipherie reichen und die zu den Seitenwänden verlaufenden Schulterflanken mitbilden. Gemäß einem Ausführungsbeispiel weist das Gummimaterial der schulterseitigen Laufstreifenteile einen geringeren dynamischen Speichermodul auf als das Gummimaterial des sonstigen Laufstreifens. Die schulterseitigen Laufstreifenteile bestehen daher aus einem Gummimaterial, welches weniger steif ist als das Gummimaterial des sonstigen Laufstreifens, wobei die schulterseitigen Laufstreifenteile zu einem gleichmäßigen Abriebverhalten des Laufstreifens beitragen sollen.

Die EP 2 052 880 A1 offenbart einen Fahrzeugluftreifen mit einem Laufstreifen mit einer die Profilierung enthaltenden Laufstreifencap und einer Laufstreifenbase, wobei der Laufstreifen in zumindest einer schulterseitigen Profilrippe einen die Laufstreifenbase kontaktierenden, die Laufstreifenaußenfläche mitbildenden, schulterseitigen Laufstreifenteil aus dem Gummimaterial der Laufstreifenbase aufweist. Das Gummimaterial des schulterseitigen Laufstreifenteiles und das Gummimaterial der Laufstreifenbase ist aus einer Kautschukmischung gefertigt, welche 20 phr bis 80 phr Ruß und 10 phr bis 40 phr Kieselsäure enthält. Das Gummimaterial der Laufstreifencap ist aus einer Kautschukmischung gefertigt, welche 40 phr bis 100 phr Kieselsäure und 0 phr bis 40 phr Ruß enthält. Das Gummimaterial der schulterseitigen Laufstreifenteile weist eine größeren Abriebwiderstand als das Gummimaterial der Laufstreifencap auf.

Beim Einlaufen des Laufstreifens eines Reifens in die Aufstandsfläche mit dem Untergrund erfahren Fahrzeugluftreifen eine laterale (seitliche) Kompression, deren Ausmaß von der Steifigkeit des mit dem Untergrund in Kontakt kommenden Gummimaterials des Laufstreifens abhängig ist. Es ist bekannt, dass ein weicheres Gummimaterial im Laufstreifen für eine gute Bremsperformance des Reifens vorteilhaft ist, jedoch das Handlingverhalten des Reifens durch seine geringe Steifigkeit negativ beeinflusst. Um die Steifigkeit in den für ein gutes Handlingverhalten wichtigen schulterseitig gelegenen Profilelementen zu erhöhen, ist es bekannt, in diesen Bereichen steifere Gummimaterialien zu verwenden. Dadurch geht der vorteilhafte Effekt des weicheren Gummimaterials im Laufstreifen zum Teil verloren.

Der Erfindung liegt die Aufgabe zugrunde, einen Reifen der eingangs genannten Art derart zu gestalten, dass das für ein gute Bremsperformance des Reifens vorteilhafte, weichere Gummimaterial über den gesamten mit dem Untergrund in Kontakt tretenden Bereich des Laufstreifens eingesetzt werden kann ohne dass die Handlingeigenschaften beeinträchtigt werden.

Gelöst wird die gestellte Aufgabe erfindungsgemäß dadurch, dass sich je ein Insert aus dem steiferen Gummimaterial außerhalb des Footprints befindet, wobei das Gummimaterial der Inserts einen dynamischen Speichermodul E' mean aufweist, welcher um 4 MPa bis 8 MPa höher ist als jener des Gummimaterials bzw. der Gummimaterialien im übrigen Laufstreifen (1), wobei E' mean gemäß DIN 53513 ermittelt wird und E' bei 0,15% Dehnung und bei 8% Dehnung gemessen wird, sodass E' mean = [E'(0,15%) +E'(8%)]/2 beträgt und wobei das Gummimaterial der Inserts eine Shore-A-Härte, ermittelt gemäß DIN ISO 7697-1, aufweist, welche um 5 Shore-A bis 15 Shore-A, insbesondere um 8 Shore-A bis 12 Shore-A, höher ist als jene des Gummimaterials bzw. der Gummimaterialien im übrigen Laufstreifen.

Die gemäß der Erfindung vorgesehenen, vorzugsweise vollständig außerhalb des Footprints befindlichen Inserts, welche aus einem steiferen Gummimaterial bestehen als das sonstige Gummimaterial im Laufstreifens, wirken überraschenderweise trotz ihrer Positionierung derart versteifend, dass gute Handlingeigenschaften erzielbar sind. Der mit dem Untergrund in Kontakt kommende Bereich des Laufstreifens kann aus einer für die Bremseigenschaften vorteilhaften weicheren Gummimischung bestehen.

Für die versteifende Wirkung der Inserts ist es dabei günstig, wenn die Inserts unmittelbar an den Footprint anschließen.

Weist der Fahrzeugluftreifen schulterseitig an den Laufstreifen anschließende Winggummis auf, ist es weiter Vorteil, wenn die Inserts bis zu den Winggummis reichen.

Bei einer weiteren bevorzugten Ausführung sind die Inserts die einzigen Inserts im Laufstreifen, deren Gummimaterial steifer ist als das sonstige Gummimaterial des Laufstreifens. Dabei können die Inserts überhaupt die einzigen Inserts im Laufstreifen sein. Es kann daher der Laufstreifen vorteilhafterweise im gesamten Footprintbereich aus einem oder mehreren Gummimaterial(ein) bestehen, das bzw. die hinsichtlich einer guten Bremsperformance ausgelegt ist bzw. sind.

Für den versteifenden Effekt der Inserts ist es ferner von Vorteil, wenn diese, von der Laufstreifenperipherie ausgehend, bis in eine Tiefe reichen, welche 30 % bis 80 % der Dicke des Laufstreifens im Zenit entspricht und wenn die Inserts an der Laufstreifenperipherie eine Breite von mindestens 3,0 mm, insbesondere von 5,0 mm bis 12,0 mm, aufweisen.

Für die versteifende Wirkung der Inserts ist es ferner vorteilhaft, wenn sie einen im Wesentlichen parallelogrammförmigen Querschnitt mit zwei im Wesentlichen parallel zueinander verlaufenden Seitenwänden aufweisen, welche in Richtung zur Mitte des Laufstreifens geneigt verlaufen und derart mit in radialer Richtung jeweils einen Winkel von 5° bis 35°, insbesondere bis zu 20°, einschließen.

Die Erfindung betrifft ferner Verfahren zur Herstellung eines Fahrzeugluftreifens gemäß einem oder mehreren der Ansprüche 1 bis 12. Bei bevorzugten Verfahren werden die Inserts als Mischungsstränge in den unvulkanisierten Laufstreifen eingesetzt oder sie werden bei der Extrusion des Laufstreifens mitextrudiert oder sie werden beim Aufbau des Laufstreifens mittels eines Strip-Winding-Verfahrens aufgespult.

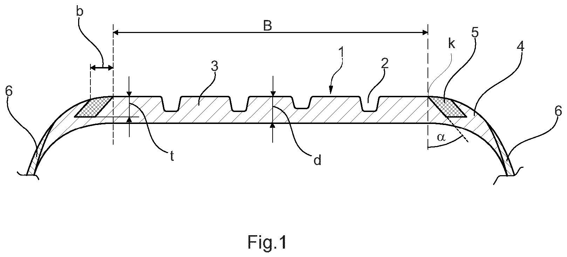

Weitere Merkmale, Vorteile und Einzelheiten der Erfindung werden nun anhand der Zeichnung, die schematisch ein Ausführungsbeispiel darstellt, näher beschrieben. Dabei zeigt die einzige Zeichnungsfigur, Fig. 1, einen Teilquerschnitt durch einen Fahrzeugluftreifen im Bereich des Laufstreifens.

Fig. 1 zeigt einen Querschnitt durch einen Laufstreifen 1 eines Fahrzeugluftreifens in Radialbauart für Personenkraftwagen. Der Laufstreifen 1 ist profiliert und weist beispielsweise Umfangsrillen 2 und zwischen den Umfangsrillen 2 verlaufende Profilrippen 3 auf, die, wie an sich bekannt, in Profilblöcke gegliedert sein können. Radial innerhalb des Laufstreifens 1 befindet sich der nicht dargestellte, beispielsweise zweilagig ausgeführte Gürtelverband, welcher zusätzlich mit einer Gürtelbandage bedeckt sein kann. Mit B ist die Footprint-Breite, welche die größte Breite des Laufstreifens in der Bodenaufstandsfläche ist, eingezeichnet und welche mit einem auf einer Normfelge montierten Reifens bei einer Last von 70 % der maximalen Tragfähigkeit und einem Innendruck von 85 % des Normdruckes (Normfelge, Normdruck, Tragfähigkeit gemäß E.T.R.T.O. -Standards) ermittelt wird. Die axial äußersten Kanten des Footprints verlaufen parallel zur Umfangsrichtung des Reifens und sind als Footprint- Kanten k bezeichnet. Außerhalb der Footprint-Kanten k weist der Laufstreifen 1 in seinen beiden Seitenbereichen einen Abschnitt auf, der jeweils eine Laufstreifenschulter 4 bildet. In jeder Laufstreifenschulter 4 befindet sich, bei der dargestellten Ausführung außerhalb der Footprint-Breite B und unmittelbar an die zugehörigen Footprint-Kanten k anschließend je ein rippen- oder streifenförmiges, in Umfangsrichtung des Laufstreifens umlaufendes Insert 5 aus einem Gummimaterial, welches sich von dem oder von den umgebenden Gummimaterial(ien) im Laufstreifen 1 dahingehend unterscheidet, dass es einen höheren dynamischen Speichermodul E' mean und eine höhere Shore-A-Härte aufweist. Der dynamische Speichermodul E' mean wird jeweils mit einer Vulkanisatprobe bei 55°C aus einer dynamisch-mechanischen Messung gemäß DIN 53513 ermittelt, dabei wird E' bei 0,15% Dehnung und E' bei 8%-Dehnung gemessen, sodass E'mean = [E'(0,15%) +E'(8%)]/2. Die Shore-A-Härte wird ebenfalls mit einer Probe im vulkanisierten Zustand bei Raumtemperatur gemäß DIN ISO 7697-1 ermittelt. Der dynamische Speichermodul E' mean des Gummimaterials der Inserts 5 ist um 4 MPa bis 8 MPa höher als jener des Gummimaterials/der Gummimaterialien im übrigen Laufstreifen 1. Die Shore-A-Härte der Inserts 5 ist um 5 Shore-A bis 15 Shore-A, insbesondere um 8 Shore-A bis 12 Shore-A, höher als jene des Gummimaterials/der Gummimaterialien im Laufstreifen 1.

Bei der in Fig. 1 gezeigt bevorzugten Ausführung ist jedes Insert 5 im Querschnitt parallelogrammförmig bzw. im Wesentlichen parallelogrammförmig mit zwei parallel zueinander oder im Wesentlichen parallel zueinander verlaufenden Seitenwänden 5a, welche, bezogen auf die jeweilige Laufstreifenschulter 4 in Richtung zur Mitte des Laufstreifens 1 geneigt verlaufen und derart mit der radialen Richtung, die durch gestrichelte Linien angedeutet ist, jeweils einen spitzen Winkel α von 5° bis 35°, insbesondere bis zu 20°, einschließen. Die Inserts 5 weisen eine Breite b auf, die an der Laufstreifenperipherie in axialer Richtung gemessen wird und mindestens 3,0 mm und insbesondere 5,0 mm bis 12,0 mm beträgt. Die Inserts 5 reichen ferner bis in eine Tiefe t, welche 30 % bis 80 % der Dicke d des Laufstreifens 1 im Zenit entspricht. Die Dicke d wird in radialer Richtung und von einer Einhüllenden an der Laufstreifenperipherie ausgehend ermittelt. In Fig. 1 sind schulterseitig an den Laufstreifen 1 anschließende Winggummis 6 angedeutet, welche bekannterweise in Richtung zu Seitenwandgummis verlaufen und mit diesen überlappen. Bei einer alternativen Ausführung reichen die Inserts 5 bis zu den Winggummis 6.

Bei weiteren, nicht dargestellten Ausführungen weisen die Inserts 5 andere Querschnittformen auf, beispielsweise V-förmig bzw. dreieckig, wobei sich das Dreieck Richtung Laufstreifenperipherie verbreitert.

Das Einbringen der Inserts 5 kann durch ein Einsetzen von entsprechend geformten Mischungssträngen in den unvulkanisierten Laufstreifen, durch entsprechende Extrusion des Laufstreifens - gemeinsam mit den Inserts - oder durch eine Herstellung des Laufstreifens mittels eines Strip-Winding-Verfahrens erfolgen.

### Bezugsziffernliste

- 1: Laufstreifen
- 2: Umfangsrille
- 3: Profilrippe
- 4: Laufstreifenschulter
- 5: Insert
- 6: Winggummi
- B: Footprint-Breite
- b: Breite
- d: Dicke
- k: Footprint-Kante
- t: Tiefe
- α: Winkel

## Patentansprüche

1. Fahrzeugluftreifen in Radialbauart mit einem Footprint, welcher mit einem auf einer Normfelge montierten Reifens bei einer Last von 70 % der maximalen Tragfähigkeit und einem Innendruck von 85 % des Normdruckes gemäß E.T.R.T.O-Standards ermittelt wird, und mit einem profilierten Laufstreifen (1) mit je einer Laufstreifenschulter (4) außerhalb der seitlichen Footprint - Kanten (k) des Footprints, wobei der Laufstreifen (1) aus zumindest einem Gummimaterial besteht und wobei im Laufstreifen (1) in Umfangsrichtung umlaufende sowie bis zur Laufstreifenperipherie reichende Inserts (5) aus einem Gummimaterial enthalten sind, welches steifer ist als das sonstige Gummimaterial des Laufstreifens (1), **dadurch gekennzeichnet,**
**dass** sich je ein Insert (5) aus dem steiferen Gummimaterial außerhalb des Footprints befindet,
wobei das Gummimaterial der Inserts (5) einen dynamischen Speichermodul E' mean aufweist, welcher um 4 MPa bis 8 MPa höher ist als jener des Gummimaterials bzw. der Gummimaterialien im übrigen Laufstreifen (1), wobei E' mean gemäß DIN 53513 ermittelt wird und E' bei 0,15% Dehnung und bei 8% Dehnung gemessen wird, sodass E' mean = [E'(0,15%) +E'(8%)]/2 beträgt und wobei das Gummimaterial der Inserts (5) eine Shore-A-Härte, ermittelt gemäß DIN ISO 7697-1, aufweist, welche um 5 Shore-A bis 15 Shore-A, insbesondere um 8 Shore-A bis 12 Shore-A, höher ist als jene des Gummimaterials bzw. der Gummimaterialien im übrigen Laufstreifen (1).

2. Fahrzeugluftreifen nach Anspruch 1, **dadurch gekennzeichnet, dass** die Inserts (5) unmittelbar an den Footprint anschließen.

3. Fahrzeugluftreifen mit schulterseitig an den Laufstreifen (1) anschließenden Winggummis (6), nach Anspruch 1 oder 2, **dadurch gekennzeichnet, dass** die Inserts (5) bis zu den Winggummis (6) reichen.

4. Fahrzeugluftreifen nach einem der Ansprüche 1 bis 3, **dadurch gekennzeichnet, dass** die Inserts (5) die einzigen Inserts (5) im Laufstreifen (1) sind, deren Gummimaterial steifer ist als das sonstige Gummimaterial des Laufstreifens (1).

5. Fahrzeugluftreifen nach einem der Ansprüche 1 bis 4, **dadurch gekennzeichnet, dass** die Inserts (5), von der Laufstreifenperipherie ausgehend, bis in eine Tiefe (t) reichen, welche 30 % bis 80 %, der Dicke (d) des Laufstreifens (1) im Zenit entspricht.

6. Fahrzeugluftreifen nach einem der Ansprüche 1 bis 5, **dadurch gekennzeichnet, dass** die Inserts (5) an der Laufstreifenperipherie eine Breite (b) von mindestens 3,0 mm, insbesondere von 5,0 mm bis 12,0 mm, aufweisen.

7. Fahrzeugluftreifen nach einem der Ansprüche 1 bis 6, **dadurch gekennzeichnet, dass** die Inserts (5) einen im Wesentlichen parallelogrammförmigen Querschnitt mit zwei im Wesentlichen parallel zueinander verlaufenden Seitenwänden (5a) aufweisen, welche in Richtung zur Mitte des Laufstreifens (1) geneigt verlaufen und derart mit der radialen Richtung jeweils einen Winkel (α) von 5° bis 35°, insbesondere bis zu 20°, einschließen.

8. Fahrzeugluftreifen nach einem der Ansprüche 1 bis 7, **dadurch gekennzeichnet, dass** die Inserts (5) die einzigen Inserts im Laufstreifen (1) sind.

9. Verfahren zur Herstellung eines Fahrzeugluftreifens gemäß einem oder mehreren der Ansprüche 1 bis 8, **dadurch gekennzeichnet, dass** die Inserts (5) als Mischungsstränge in den unvulkanisierten Laufstreifen eingesetzt werden.

10. Verfahren zur Herstellung eines Fahrzeugluftreifens gemäß einem oder mehrerer der Ansprüche 1 bis 8, **dadurch gekennzeichnet, dass** die Inserts (5) bei der Extrusion des Laufstreifens mitextrudiert werden.

11. Verfahren zur Herstellung eines Fahrzeugluftreifens gemäß einem oder mehrerer der Ansprüche 1 bis 8, **dadurch gekennzeichnet, dass** die Inserts (5) beim Aufbau des Laufstreifens mittels eines Strip-Winding-Verfahrens aufgespult werden.

## Claims

1. Pneumatic vehicle tyre of a radial design with a footprint that is determined with a tyre mounted on a standard rim under a load of 70% of the maximum load-bearing capacity and an internal pressure of 85% of the standard pressure in accordance with E.T.R.T.O. standards and with a profiled tread (1) with a tread shoulder (4) outside each of the side footprint edges (k) of the footprint, wherein the tread (1) consists of at least one rubber material and wherein the tread (1) contains inserts (5) which run around in the circumferential direction, reach as far as the tread periphery and are made of a rubber material that is stiffer than the other rubber material of the tread (1),
**characterized in that**
an insert (5) made of the stiffer rubber material is situated outside the footprint on each side,
wherein the rubber material of the inserts (5) has a dynamic storage modulus E' mean which is 4 MPa to 8 MPa higher than that of the rubber material or the rubber materials in the rest of the tread (1), wherein E' mean is determined in accordance with DIN 53513 and E' is measured under 0.15% elongation and under 8% elongation, so that E' mean = [E'(0.15%) +E'(8%)]/2, and wherein the rubber material of the inserts (5) has a Shore A hardness, determined in accordance with DIN ISO 7697-1, which is 5 Shore A to 15 Shore A, in particular 8 Shore A to 12 Shore A, higher than that of the rubber material or the rubber materials in the rest of the tread (1).

2. Pneumatic vehicle tyre according to Claim 1, **characterized in that** the inserts (5) directly adjoin the footprint.

3. Pneumatic vehicle tyre with wing rubbers (6) adjoining the tread (1) at the shoulders, according to Claim 1 or 2, **characterized in that** the inserts (5) reach as far as the wing rubbers (6).

4. Pneumatic vehicle tyre according to one of Claims 1 to 3, **characterized in that** the inserts (5) are the only inserts (5) in the tread (1) of a stiffer rubber material than the other rubber material of the tread (1).

5. Pneumatic vehicle tyre according to one of Claims 1 to 4, **characterized in that**, taken from the tread periphery, the inserts (5) reach to a depth (t) which corresponds to 30% to 80% of the thickness (d) of the tread (1) at the crown.

6. Pneumatic vehicle tyre according to one of Claims 1 to 5, **characterized in that** the inserts (5) have at the tread periphery a width (b) of at least 3.0 mm, in particular of 5.0 mm to 12.0 mm.

7. Pneumatic vehicle tyre according to one of Claims 1 to 6, **characterized in that** the inserts (5) have a substantially parallelogram-shaped cross section with two side walls (5a) running substantially parallel to one another, which extend in an inclined manner in the direction of the middle of the tread (1) and in each case include an angle (α) of 5° to 35°, in particular to 20°, with the radial direction.

8. Pneumatic vehicle tyre according to one of Claims 1 to 7, **characterized in that** the inserts (5) are the only inserts in the tread (1).

9. Method for producing a pneumatic vehicle tyre according to one or more of Claims 1 to 8, **characterized in that** the inserts (5) are inserted into the unvulcanized tread as strands of extruded mixture.

10. Method for producing a pneumatic vehicle tyre according to one or more of Claims 1 to 8, **characterized in that** the inserts (5) are co-extruded during the extrusion of the tread.

11. Method for producing a pneumatic vehicle tyre according to one or more of Claims 1 to 8, **characterized in that** the inserts (5) are wound on by means of a strip winding process during the build-up of the tread.

## Revendications

1. Pneumatique pour véhicule de construction radiale avec une empreinte qui est déterminée avec un pneu monté sur une jante standard pour une charge de 70 % de la capacité de charge maximale et une pression interne de 85 % de la pression standard selon les normes E.T.R.T.O., et avec une bande de roulement profilée (1), avec un épaulement (4) de bande de roulement respectif à l'extérieur des bords latéraux (k) de l'empreinte, la bande de roulement (1) étant constituée d'au moins un matériau caoutchouc et d'inserts (5), en un matériau de caoutchouc qui est plus rigide que le reste du matériau de caoutchouc de la bande de roulement (1), s'étendant circonférentiellement dans la bande de roulement (1) et s'étendant jusqu'à la périphérie de la bande de roulement, **caractérisé**
**en ce qu'**un insert (5) en matériau de caoutchouc plus rigide se trouve à l'extérieur de l'empreinte,
le matériau en caoutchouc des inserts (5) présentant un module d'accumulation dynamique E' mean qui est supérieur de 4 MPa à 8 MPa à celui du matériau en caoutchouc ou des matériaux en caoutchouc dans le reste de la bande de roulement (1), E' mean étant déterminé selon la norme DIN 53513 et E' étant mesuré à 0,15 % d'allongement et à 8 % d'allongement, de sorte que E' mean = [E'(0,15 %) + E'(8 %)]/2 et le matériau en caoutchouc des inserts (5) présente une dureté Shore A, déterminée selon DIN ISO 7697-1, qui est supérieure de 5 Shore A à 15 Shore A, en particulier de 8 Shore A à 12 Shore A, à celle du matériau en caoutchouc ou des matériaux en caoutchouc du reste de la bande de roulement (1).

2. Pneumatique pour véhicule selon la revendication 1, **caractérisé en ce que** les inserts (5) sont raccordés directement à l'empreinte.

3. Pneumatique pour véhicule avec des gommes d'usure (6) se raccordant à la bande de roulement (1) du côté de l'épaulement, selon la revendication 1 ou la revendication 2, **caractérisé en ce que** les inserts (5) s'étendent jusqu'aux gommes d'usure (6).

4. Pneumatique pour véhicule selon l'une des revendications 1 à 3, **caractérisé en ce que** les inserts (5) sont les seuls inserts (5) de la bande de roulement (1) dont le matériau de caoutchouc est plus rigide que le reste du matériau de caoutchouc de la bande de roulement (1).

5. Pneumatique pour véhicule selon l'une des revendications 1 à 4, **caractérisé en ce que** les inserts (5) s'étendent, en partant de la périphérie de la bande de roulement, jusqu'à une profondeur (t) correspondant à 30 % à 80 % de l'épaisseur (d) de la bande de roulement (1) au zénith.

6. Pneumatique pour véhicule selon l'une des revendications 1 à 5, **caractérisé en ce que** les inserts (5) présentent à la périphérie de la bande de roulement une largeur (b) d'au moins 3,0 mm, en particulier allant de 5,0 mm à 12,0 mm.

7. Pneumatique pour véhicule selon l'une des revendications 1 à 6, **caractérisé en ce que** les inserts (5) présentent une section transversale sensiblement en forme de parallélogramme avec deux parois latérales (5a) sensiblement parallèles l'une à l'autre, qui s'étendent de manière inclinée en direction du centre de la bande de roulement (1) et forment ainsi avec la direction radiale respectivement un angle (α) allant de 5° à 35°, en particulier allant jusqu'à 20°.

8. Pneumatique pour véhicule selon l'une des revendications 1 à 7, **caractérisé en ce que** les inserts (5) sont les seuls inserts dans la bande de roulement (1).

9. Procédé de fabrication d'un pneumatique pour véhicule selon une ou plusieurs des revendications 1 à 8, **caractérisé en ce que** les inserts (5) sont utilisés sous forme de brins de mélange dans la bande de roulement non vulcanisée.

10. Procédé de fabrication d'un pneumatique pour véhicule selon une ou plusieurs des revendications 1 à 8, **caractérisé en ce que** les inserts (5) sont co-extrudés lors de l'extrusion de la bande de roulement.

11. Procédé de fabrication d'un pneumatique pour véhicule selon une ou plusieurs des revendications 1 à 8, **caractérisé en ce que** les inserts (5) sont enroulés lors de la constitution de la bande de roulement au moyen d'un procédé de strip-winding.
